# EUROPEAN PATENT APPLICATION

(11) **EP 4 027 308 A2**
(43) Date of publication of application: **13.07.2022**
(21) Application number: 21217954.3
(22) Date of filing: 28.12.2021
(51) Int. Cl.: G06V 40/20

(54) **INFORMATION PROCESSING APPARATUS, OUTPUT METHOD, AND INFORMATION PROCESSING PROGRAM**

(30) Priority: 08.01.2021 JP 2021001876
(71) Applicant: FUJITSU LIMITED, Kawasaki-shi, Kanagawa 211-8588 (JP)
(72) Inventor: Saito, Takahiro, Kawasaki-shi, Kanagawa 211-8588 (JP)
(74) Representative: Hoffmann Eitle

(57) **Abstract**

An information processing apparatus includes a detection unit that detects a plurality of movements of an object from a moving image; an evaluation unit that generates a first timing that indicates a first movement included in the plurality of movements is detected in the moving image, acquires second timings that indicate the first movement within each of patterns including the first movement, the second timings indicating when movements occur, the patterns are included in a plurality of patterns for recognition of movement within at least one moving image, and obtains a plurality of first similarity values by calculating a first similarity value between the moving image and each of the patterns based on the first timing and each of the second timings; and an output unit that specifies a candidate pattern from the patterns based on the plurality of first similarity values.

## Description

### FIELD

The embodiments discussed herein are related to an information processing apparatus, an output method, and an information processing apparatus.

### BACKGROUND

In recent years, there has been a rapid increase in demand for analysis of moving image data with artificial intelligence (AI) in various business fields. For example, recognition of an action of a person from a moving image is performed by using a recognition model obtained by machine learning such as deep learning.

In this regard, techniques related to analysis of images such as moving images are known. Furthermore, a technique related to retrieval of a similar moving image by using a moving image as input is also known.

Japanese Laid-open Patent Publication No. 2019-176423, Japanese Laid-open Patent Publication No. 2015-116308, Japanese Laid-open Patent Publication No. 2005-228274, and Kimura, Shogo et al., "Content-Based Video Retriaval with reasons of similarities using images&sounds", 49th Programming Symposium, p.97-p.106, January 2008 are disclosed as related art.

### SUMMARY

### [TECHNICAL PROBLEM]

For example, in a case where a recognition model that detects an action of a recognition object is generated by deep learning or the like, a large amount of moving image data for learning is needed for each action to be recognized. In addition, for example, it may take time or it may be difficult to collect moving image data for learning, and it may be difficult to generate a recognition model that recognizes an action of a recognition object.

Incidentally, for example, an action of a person is generated from a combination of basic movements of a person, such as walking, shaking the head, and reaching out a hand. Thus, for example, it is conceivable that a recognition model that recognizes various basic movements of a person is created in advance, and a rule for recognizing complicated actions of a person such as a suspicious action and a purchase action is described for a combination of the basic movements, to detect an action. In addition, by defining the rule for the combination of the basic movements in this way, it becomes possible to recognize an action of a recognition object by using the rule without preparing a large number of moving images in which actions of the recognition object are captured.

However, know-how and experience are needed to generate the rule by combining the basic movements to recognize the action to be recognized. In addition, it takes manpower and a cost to generate a rule for each of various actions to be recognized. Therefore, when a new rule for recognizing an action is created, it is preferable that a rule may be diverted from rules created in the past.

In one aspect, it is an object of an embodiment to specify, among existing rules, a rule for recognizing an action similar to an action captured in a moving image.

### [SOLUTION TO PROBLEM]

According to an aspect of the embodiments, an information processing apparatus includes a detection unit that detects a plurality of movements of an object from a moving image; an evaluation unit that generates a first timing that indicates a first movement included in the plurality of movements is detected in the moving image for each of a plurality of time units of the moving image, acquires second timings that indicate the first movement within each of at least one of patterns including the first movement, the second timings indicating when movements occur for each of a plurality of time units of time period, the patterns are included in a plurality of patterns for recognition of movement within at least one moving image, and obtains a plurality of first similarity values by calculating a first similarity value between the moving image and each of the patterns based on the first timing and each of the second timings; and an output unit that specifies a candidate pattern from the patterns based on the plurality of first similarity values.

### [ADVANTAGEOUS EFFECTS OF INVENTION]

It is possible to specify, among existing rules, a rule for recognizing an action similar to an action captured in a moving image.

### BRIEF DESCRIPTION OF DRAWINGS

FIG. 1 is a diagram illustrating an action recognition system according to an embodiment;
FIG. 2 is a diagram illustrating a block configuration of an information processing apparatus according to the embodiment;
FIG. 3 is a diagram illustrating link relationships in rule information according to the embodiment;
FIG. 4 is a diagram illustrating class definitions of a basic movement recognition result;
FIG. 5 is a diagram illustrating class definitions of a rule;
FIG. 6 is a diagram illustrating class definitions of an action detection period;
FIG. 7 is a diagram illustrating definitions of predicates in a graph structure of the rule information;
FIG. 8 is a diagram illustrating an operation flow of output processing of a candidate rule according to the embodiment;
FIG. 9 is a diagram illustrating a rule for detecting an action of taking a product from a shelf and information associated with the rule;
FIG. 10 is a diagram illustrating information regarding an input moving image;
FIGs. 11A and 11B are diagrams illustrating exemplary application of a dynamic time warping method;
FIG. 12 is a diagram illustrating a graph structure in a case where a rule according to a modification of the embodiment is applied to a plurality of moving images;
FIG. 13 is a diagram illustrating an operation flow of output processing of a candidate rule according to the modification of the embodiment; and
FIG. 14 is a diagram illustrating a hardware configuration of a computer for achieving the information processing apparatus according to the embodiment.

### DESCRIPTION OF EMBODIMENTS

Hereinafter, several embodiments will be described in detail with reference to the drawings. Note that corresponding elements in a plurality of drawings are denoted by the same reference sign.

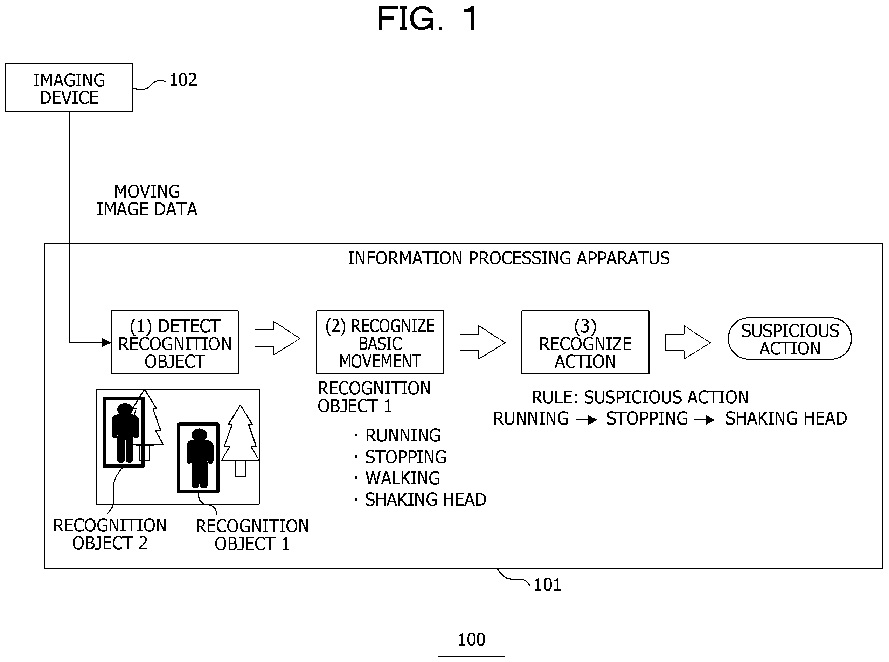

FIG. 1 is a diagram illustrating an action recognition system 100 according to an embodiment. The action recognition system 100 includes, for example, an information processing apparatus 101 and an imaging device 102. The information processing apparatus 101 may be, for example, a computer having a function of processing moving images, such as a server computer, a personal computer (PC), a mobile PC, and a tablet terminal. The imaging device 102 is, for example, a device that captures a moving image, such as a camera. The information processing apparatus 101 may be, for example, communicably connected to the imaging device 102, and receives moving image data captured by the imaging device 102. Furthermore, in another embodiment, the information processing apparatus 101 may receive moving image data captured by the imaging device 102 from another device, or may be manufactured integrally with the imaging device 102.

When receiving moving image data, the information processing apparatus 101 analyzes the received moving image and detects a recognition object ((1) in FIG. 1). In one example, the information processing apparatus 101 may detect a person from the moving image. In the example of FIG. 1, the information processing apparatus 101 detects two persons, a recognition object 1 and a recognition object 2, from the moving image.

Subsequently, the information processing apparatus 101 recognizes a basic movement from the recognition object captured in the moving image ((2) in FIG. 1). The basic movement may be, for example, a basic movement taken by the object, and in one example, may include a movement of each part obtained by dividing the body of the object into parts for each joint. Furthermore, examples of the basic movement may include movements that the object often takes in various situations, such as walking, running, throwing, grasping, kicking, jumping, and eating. For example, the information processing apparatus 101 may detect a plurality of basic movements from the moving image by using a recognition model that detects various basic movements. FIG. 1 illustrates an example in which the information processing apparatus 101 detects four basic movements of "running", "stopping", "walking", and "shaking the head" from the person as the recognition object 1 captured in the moving image.

Subsequently, the information processing apparatus 101 recognizes whether the recognition object has taken an action corresponding to a rule on the basis of whether the basic movement of the recognition object detected from the moving image conforms to the rule ((3) in FIG. 1). The rule may be represented by, for example, a pattern of basic movements. FIG. 1 illustrates an example of applying a rule for detecting a suspicious action to the recognition object 1 of the moving image, and since a pattern of the basic movements of "running → stopping → shaking the head" is detected, the information processing apparatus 101 detects a suspicious action.

In this way, by defining a rule for detecting an action of a recognition object by using a pattern of basic movements, it is possible to detect an action of the recognition object by using the rule without preparing a large number of moving images for learning in which actions of the recognition object are captured. Thus, for example, even in a case where a system that detects an action of a recognition object is introduced, it is possible to easily introduce the system without trouble of preparing learning data, and the like.

However, know-how and experience are needed to generate such a rule. In addition, it takes manpower and a cost to generate a rule for each of various actions to be recognized. Therefore, when a new rule for detecting an action is created, it is preferable that a rule may be diverted from rules created in the past. For example, when a rule generated in the past for recognizing an action similar to an action to be recognized may be diverted, labor related to generation of a rule may be reduced.

As one method of specifying a rule for detecting an action similar to an action of a recognition object from the rules generated in the past, in one example, it is conceivable to execute retrieval with a keyword on the rules generated in the past. For example, it is assumed that metadata such as a name given to data of a rule includes a keyword related to an action to be detected by the rule. In this case, there is a possibility that a rule for detecting an action similar to an action of a recognition object may be specified by executing the retrieval with a character string or the like representing an action to be recognized.

However, in practice, information registered in the metadata or the like may vary from person to person. As one example, even a rule for recognizing the same action may be titled "screw fastening", or may be titled "process 1-A" or the like. Alternatively, even when an action is the same "screw fastening" action, in practice, a basic movement that characterizes the action may differ depending on a fixing position where a screw is fastened, or the like. Thus, it may be difficult to specify a rule suitable for diversion by the retrieval with a keyword.

Furthermore, as another method, for example, it is also conceivable to retrieve a moving image similar to a moving image in which an action desired to be recognized is captured, extract a rule created from the hit moving image, and divert the rule. However, retrieval of a similar moving image is, for example, a technique for retrieving a similar moving image by using a color, the number of persons captured in the moving image, and the like at present, as described in Kimura, Shogo et al., "Construction of Similar Moving Image Retrieval System with Similar Reason Presentation Function", 49th Programming Symposium, p.97-p.106, January 2008, and it is difficult to expect that a moving image in which a similar action is captured is properly retrieved. Therefore, it is desired to further provide a technique for specifying, from existing rules, a rule for recognizing an action similar to an action captured in a moving image to be recognized.

In the embodiment described below, the information processing apparatus 101 stores, in a storage device, a plurality of rules for defining patterns of basic movements for detecting an action of an object in association with first time-series information representing detection timing of a plurality of basic movements included in the patterns of basic movements in time series. Note that each of the rules may be, for example, a rule for detecting a different action. Then, in a case where a moving image for which a new rule is to be created is input, the information processing apparatus 101 executes detection of a basic movement from the moving image and detects at least one basic movement. Subsequently, the information processing apparatus 101 evaluates, for each of a plurality of rules, a degree of similarity between the rule and the moving image on the basis of the first time-series information associated with the rule and second time-series information representing detection timing of the at least one basic movement of the moving image in time series. Then, on the basis of the degree of similarity, the information processing apparatus 101 outputs a candidate rule to be a candidate for diversion from the plurality of rules.

In this way, by evaluating the degree of similarity between the rule and the moving image on the basis of the first time-series information associated with the rule and the second time-series information regarding the at least one basic movement detected from the moving image, it is possible to efficiently specify a similar rule that is likely to be diverted. Hereinafter, the embodiment will be described in more detail.

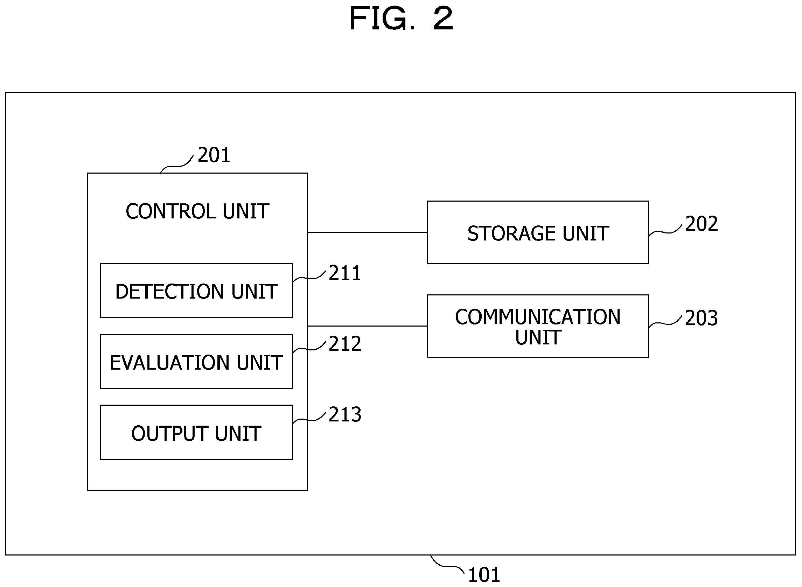

FIG. 2 is a diagram illustrating a block configuration of the information processing apparatus 101 according to the embodiment. The information processing apparatus 101 includes, for example, a control unit 201, a storage unit 202, and a communication unit 203. The control unit 201 includes, for example, a detection unit 211, an evaluation unit 212, an output unit 213, and may also include another functional unit. The storage unit 202 of the information processing apparatus 101 stores, for example, information of rule information 300, such as a basic movement recognition result 301, a rule 302, and an action detection period 303, which will be described later. The communication unit 203 communicates with another device according to an instruction from the control unit 201, for example. For example, the communication unit 203 may be connected to the imaging device 102 and receive moving image data captured by the imaging device 102. Details of each of these units and details of the information stored in the storage unit 202 will be described later.

As described above, in the embodiment, rules created in the past are associated with recognition results of basic movements of actions recognized by the rules, and accumulated in the rule information 300. Hereinafter, as an example, the rule information 300 in which information regarding rules are accumulated will be described by taking a graph database (DB) having a graph structure as an example.

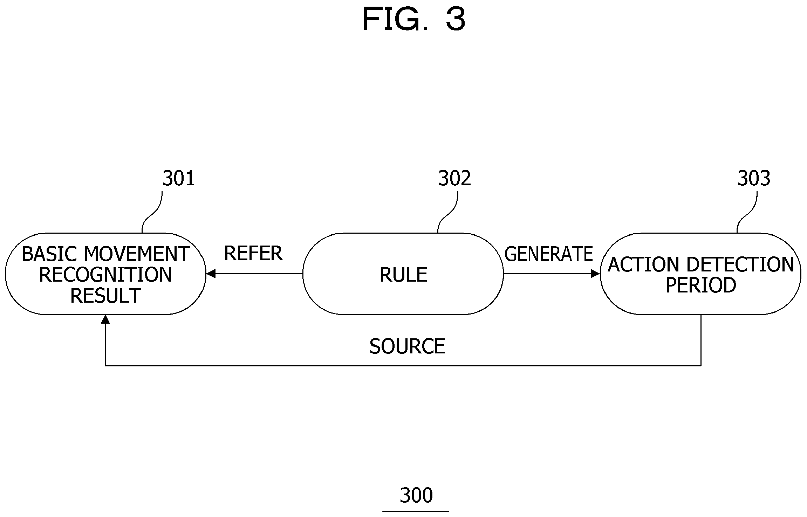

FIG. 3 is a diagram illustrating link relationships in the rule information 300 according to the embodiment. In FIG. 3, three classes of the basic movement recognition result 301, the rule 302, and the action detection period 303 are illustrated. Furthermore, the classes are connected by predicates such as refer, generate, and source.

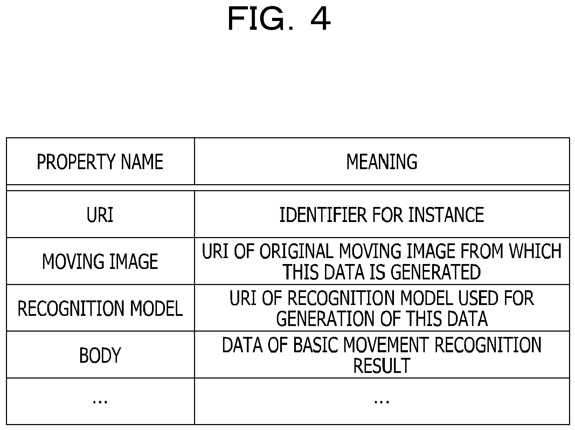

FIG. 4 is a diagram illustrating class definitions of the basic movement recognition result 301. Examples of a class of the basic movement recognition result 301 may include properties such as a uniform resource identifier (URI), a moving image, a recognition model, and a body. The URI is, for example, an identifier for identifying an instance of the basic movement recognition result 301. The moving image is, for example, a URI of moving image data used for generation of the basic movement recognition result 301. The recognition model is, for example, a URI of a recognition model of a basic movement used for generation of the basic movement recognition result 301. The body may include, for example, data of a recognition result of a basic movement obtained by executing recognition of the basic movement by the recognition model for moving image data indicated in the moving image of the basic movement recognition result 301. The recognition result of the basic movement stored in the body of the basic movement recognition result 301 may be referred to as, for example, the first time-series information.

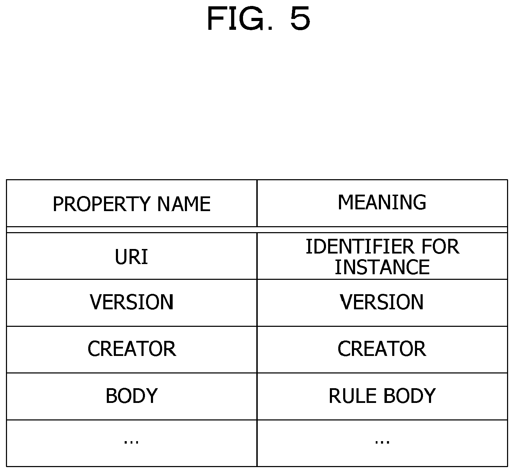

FIG. 5 is a diagram illustrating class definitions of the rule 302. The rule 302 may include, for example, properties such as a URI, a version, a creator, and a body. The URI is, for example, an identifier for identifying an instance of the rule 302. The version is, for example, information indicating a version of the rule defined in the rule 302. The creator is, for example, information indicating a creator of the rule defined in the rule 302. The body is, for example, information indicating the rule defined in the rule 302. Note that the rule may be represented by, for example, information indicating a pattern of basic movements for recognizing an action to be detected. The pattern of basic movements may include, for example, information indicating a combination of basic movements. Furthermore, the pattern of basic movements may include, for example, information indicating detection order of basic movements, or the like.

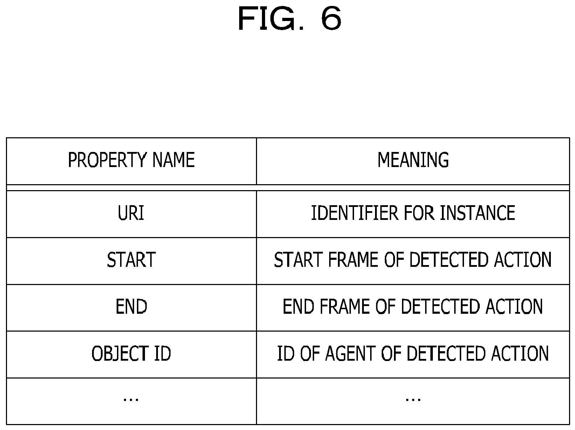

FIG. 6 is a diagram illustrating class definitions of the action detection period 303. The action detection period 303 may include, for example, properties such as a URI, start, end, and an object identifier (ID). The URI is, for example, an identifier for identifying an instance of the action detection period 303. The start is, for example, information indicating a start frame of an action detected from a moving image. The end is, for example, information indicating an end frame of the action detected from the moving image. The object ID is, for example, an identifier for identifying an agent of the detected action. For example, in a case where a rule for detecting a certain action is applied to a certain moving image and the action is detected, information indicating a period from start to end when the action is detected may be registered in the action detection period 303.

Note that the class definitions of the basic movement recognition result 301 indicated in FIG. 4, the rule 302 indicated in FIG. 5, and the action detection period 303 indicated in FIG. 6 are exemplary, and the embodiment is not limited thereto. For example, in another embodiment, the classes of the basic movement recognition result 301, the rule 302, and the action detection period 303 may include another property, and a part of the properties may be deleted or replaced.

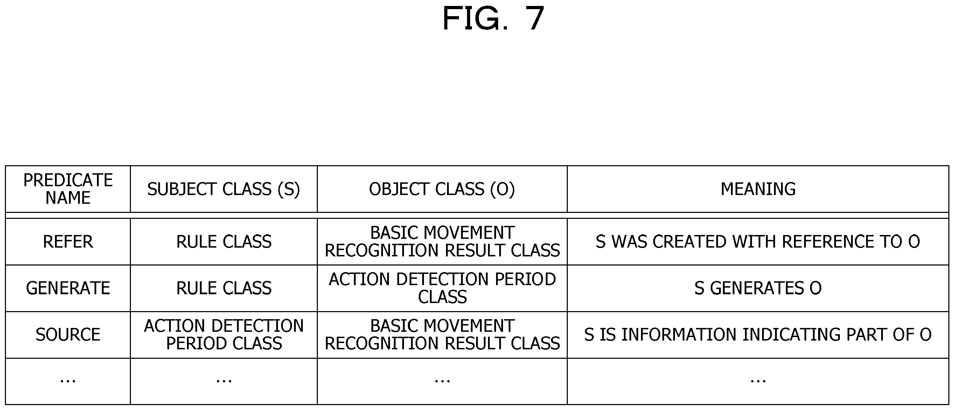

FIG. 7 is a diagram illustrating definitions of the predicates in the graph structure of the rule information 300. The rule information 300 according to the embodiment may include, for example, the predicates of refer, generate, and source.

The refer indicates that "S was created with reference to O", as indicated in FIG. 7, where S is the rule 302 and O is the basic movement recognition result 301. Thus, in the rule information 300, a triple connected by a reference edge from the rule 302 to the basic movement recognition result 301 indicates that the rule 302 was created with reference to the basic movement recognition result 301 connected by the reference edge.

The generate indicates that "S generates O", as indicated in FIG. 7, where S is the rule 302 and O is the action detection period 303. Thus, in the rule information 300, a triple connected by a generation edge from the rule 302 to the action detection period 303 indicates that the rule 302 generated the action detection period 303 connected by the generation edge.

The source indicates that "S is information indicating a part of O", as indicated in FIG. 7, where S is the action detection period 303 and O is the basic movement recognition result 301. Thus, in the rule information 300, a triple connected by a source edge from the action detection period 303 to the basic movement recognition result 301 indicates that the action detection period 303 is information indicating a part of the basic movement recognition result 301 connected by the source edge.

Note that the definitions of the predicates indicated in FIG. 7 are exemplary, and the embodiment is not limited thereto. For example, in another embodiment, another predicate may be included, or a part of the predicates in FIG. 7 may be deleted or replaced.

As described above, in one embodiment, the existing rules 302 are accumulated as the rule information 300 in association with recognition results of basic movements included in actions recognized by the rules by using the graph structure.

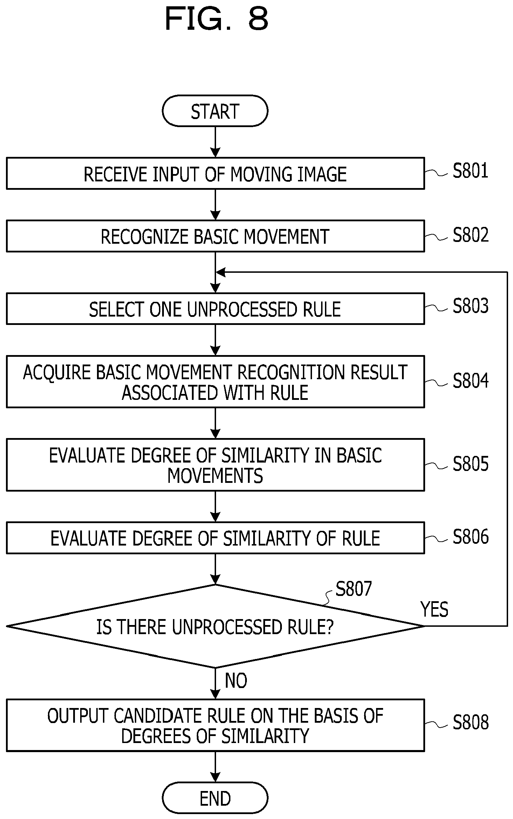

Subsequently, specification of a candidate rule from the existing rules for a moving image in which an action of a recognition object is captured according to the embodiment will be described. FIG. 8 is a diagram illustrating an operation flow of output processing of a candidate rule according to the embodiment. For example, the control unit 201 of the information processing apparatus 101 may start the operation flow in FIG. 8 when an instruction for execution of the output processing of a candidate rule is input.

In Step 801 (hereinafter, Step is described as "S", and denoted as, for example, S801), the control unit 201 of the information processing apparatus 101 receives input of moving image data in which an action for which a rule is to be created is captured.

In S802, the control unit 201 executes recognition of a basic movement for the input moving image. For example, the control unit 201 may recognize the basic movement from the moving image by using a recognition model machine-learned by deep learning or the like so as to recognize a basic movement to be recognized. As described above, the basic movement may be, for example, a basic movement taken by the object, and in one example, may include a movement of each part obtained by dividing the body of the object into parts for each joint. Furthermore, examples of the basic movement may include movements that the object often takes in various situations, such as walking, running, throwing, grasping, kicking, jumping, and eating. Note that a recognition result obtained by executing the recognition of the basic movement for the input moving image may be referred to as, for example, the second time-series information.

In S803, the control unit 201 selects one unprocessed rule 302 from the rules 302 of the rule information 300.

In S804, the control unit 201 acquires the basic movement recognition result 301 associated with the selected rule 302 from the rule information 300.

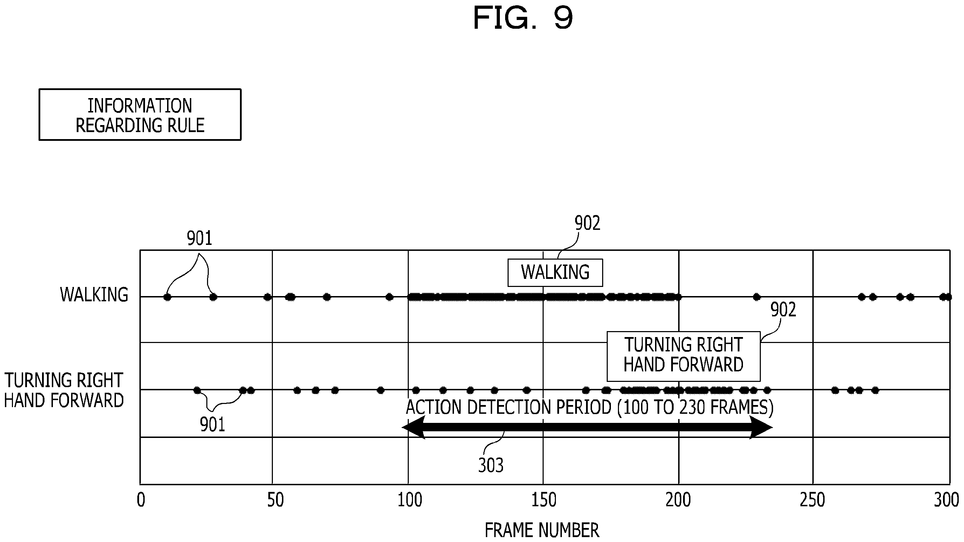

In S805, the control unit 201 evaluates a degree of similarity between the selected rule 302 and the input moving image in the basic movements. For example, the control unit 201 may evaluate a degree of similarity between the basic movement recognition result 301 associated with the selected rule 302 and a recognition result of the basic movement detected from the input moving image. Hereinafter, an example of the evaluation of the degree of similarity in the basic movements according to one embodiment will be described with reference to FIGs. 9 to 11B.

### [Example of Evaluation of Degree of Similarity in Basic Movements]

FIG. 9 illustrates the rule 302 for detecting an action of a customer taking a product from a shelf in a food-selling section or the like, and information regarding basic movement recognition results 301 and action detection period 303 associated with the rule 302.

Information regarding a basic movement of the rule 302 for detecting the action of taking a product from a shelf may be acquired from, for example, the body property of the rule 302. In one example, the rule 302 for detecting the action of taking a product from a shelf may be defined as a rule for detecting a basic movement: walking, then a basic movement: turning the right hand forward. Note that the definition of the rule is exemplary, and the rule 302 for detecting the action of taking a product from a shelf may be defined by another pattern of basic movements.

Furthermore, in FIG. 9, a horizontal axis is a frame number in the moving image used for generation of the basic movement recognition results 301. In addition, in FIG. 9, the basic movement recognition results 301 obtained by detecting the basic movement: walking and the basic movement: turning the right hand forward by the recognition model are arranged and indicated vertically. In FIG. 9, a point 901 indicated in each row of the basic movement: walking and the basic movement: turning the right hand forward represents a frame at which the basic movement is detected when the detection of the basic movement is executed by the recognition model for the moving image. Furthermore, a frame without the point 901 represents that the basic movement is not detected by the recognition model. These pieces of information regarding the recognition results of the basic movements used in the rule 302 may be acquired from, for example, the body of the basic movement recognition result 301.

Moreover, in FIG. 9, the action detection period 303 in which the action of taking a product from a shelf is detected is indicated by an arrow. The information regarding the action detection period 303 in which the action of taking a product from a shelf is detected may be acquired from, for example, the start and end properties of the action detection period 303.

As described above, for example, the control unit 201 may acquire the information indicated in FIG. 9 from the selected rule 302 and the basic movement recognition results 301 and action detection period 303 associated with the rule 302.

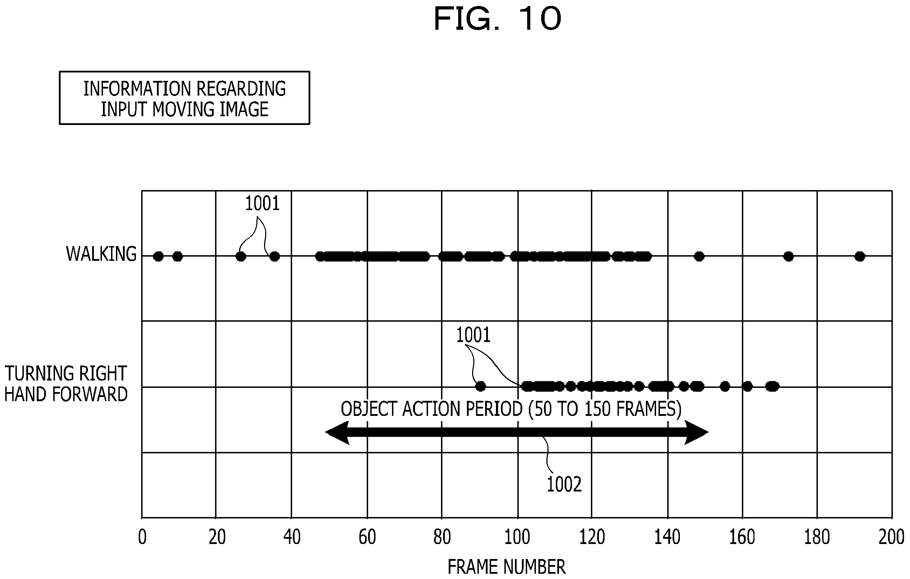

Subsequently, with reference to FIG. 10, acquisition of information for the evaluation of the degree of similarity for the input moving image will be described. In FIG. 10, a horizontal axis is a frame number in the input moving image. In addition, FIG. 10 indicates a result of the recognition of the basic movement executed in S802 for the input moving image. Note that, in the example of FIG. 10, as the basic movement, detection results of the basic movements of walking and turning the right hand forward are indicated as in FIG. 9. For example, in FIG. 10, a point 1001 indicated in each row of the basic movement: walking and the basic movement: turning the right hand forward represents a frame at which the basic movement is detected when the detection of each basic movement is executed by the recognition model for the moving image. Furthermore, a frame without the point 1001 represents that the basic movement is not detected by the recognition model. Note that the recognition results of the basic movements may include a recognition result of another basic movement predetermined as a basic movement to be detected.

Furthermore, in FIG. 10, an object action period 1002 in which an action for which a rule is to be generated is captured is indicated by an arrow. The object action period 1002 may be specified by, for example, a user. For example, in a case where a new rule for detecting an action is created for a moving image, a user often recognizes an action desired to be detected, and by watching the moving image, the user may specify which section includes the action desired to be detected by the rule. Thus, in one example, the user may specify the section in which the action desired to be detected is captured in the moving image, and input the moving image to the information processing apparatus 101. The control unit 201 of the information processing apparatus 101 may use the specified section as the object action period 1002 for creating the rule.

As described above, for example, the control unit 201 may acquire the information indicated in FIG. 10 for the input moving image.

Then, by using the information indicated in FIGs. 9 and 10, the control unit 201 evaluates the degree of similarity between the selected rule 302 and the input moving image. In one example, the control unit 201 evaluates degrees of similarity between the recognition results of the corresponding basic movements between the selected rule 302 and the input moving image. For example, in the examples of FIGs. 9 and 10, both the selected rule and the input moving image include the basic movement: walking and the basic movement: turning the right hand forward. Thus, for example, the control unit 201 may evaluate degrees of similarity for the basic movements of the basic movement: walking and the basic movement: turning the right hand forward.

Note that the length of a period in which an action to be detected is detected may differ depending on the moving image. For example, in the selected rule 302 in FIG. 9, the action detection period 303 in which the action to be detected is detected is set from 100 frames to 230 frames, and the length thereof is 130 frames. On the other hand, in the input moving image in FIG. 10, the period of 50 frames to 150 frames is specified as the object action period 1002 in which the action to be detected is captured, and the length thereof is 100 frames. Thus, in one embodiment, the control unit 201 uses a method such as a dynamic time warping (DTW) method to associate two pieces of time-series information of the action to be compared to generate corresponding series.

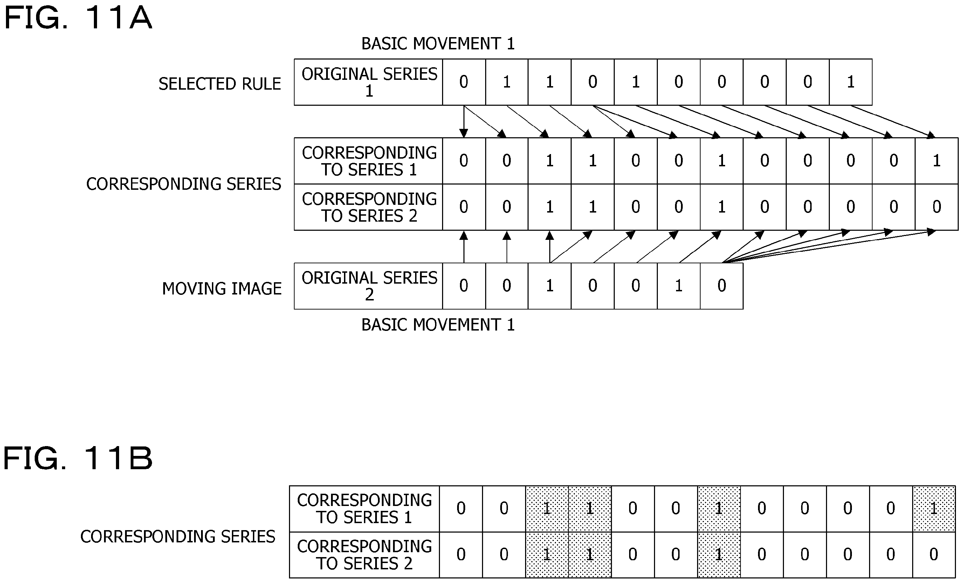

FIGs. 11A and 11B are diagrams illustrating exemplary application of the dynamic time warping method. In an upper part of FIG. 11A, a recognition result in the action detection period 303 of a basic movement 1 (for example, walking) derived from the selected rule is indicated as an original series 1. Furthermore, in a lower part of FIG. 11A, a recognition result in the object action period 1002 of the basic movement 1 (for example, walking) derived from the input moving image is indicated as an original series 2. Note that, in the original series 1 and the original series 2, 0 represents a frame in which the basic movement 1 is not detected, and 1 represents a frame in which the basic movement 1 is detected.

In this case, corresponding series of the same length may be obtained by using the dynamic time warping method. The dynamic time warping method is, for example, algorithm that obtains a distance between each point of two time series by round robin, and after obtaining all the distances, finds a path in which the two time series are the shortest. In the obtained corresponding series, all pieces of the data are associated with the selected rule and the moving image.

Then, the control unit 201 calculates a degree of similarity between the corresponding series. For example, the control unit 201 may use a Jaccard index of the corresponding series as the degree of similarity. The Jaccard index may be obtained by, for example, the following equation.

Jaccard index = The number of frames in which both are 1/The number of frames in which at least one is 1

As illustrated in FIG. 11B, in the corresponding series, the number of frames in which at least one is 1 is 4, and the number of frames in which both are 1 is 3. Thus, 3/4 may be obtained as the Jaccard index. In one example, the control unit 201 may use the Jaccard index as the degree of similarity between the basic movements.

Note that the degree of similarity according to the embodiment is not limited to the Jaccard index, and may be another degree of similarity. For example, in another embodiment, a Dice index, a Simpson index, or the like may be used. Furthermore, for example, in a case where the basic movement recognition result 301 is represented by a vector, a cosine degree of similarity or the like may be adopted.

For example, as described above, the control unit 201 may evaluate the degree of similarity between the recognition results of the corresponding basic movement between the selected rule 302 and the input moving image.

In S806, the control unit 201 evaluates a degree of similarity to the rule 302. For example, in a case where degrees of similarity between a corresponding plurality of basic movements are obtained between the rule 302 and the input moving image in S805, the control unit 201 may further obtain a representative degree of similarity that represents the degrees of similarity between the corresponding plurality of basic movements. For example, between the rule 302 illustrated in FIG. 9 and the moving image illustrated in FIG. 10, the two basic movements of walking and turning the right hand forward correspond. Thus, the control unit 201 executes the processing of S805 for these two basic movements, and the degree of similarity is obtained for each of the basic movements. Then, in S806, the control unit 201 may obtain a representative degree of similarity that represents the obtained two degrees of similarity.

In one example, the control unit 201 may use an average value of the degrees of similarity obtained for the recognition results of the corresponding basic movements as the representative degree of similarity. For example, it is assumed that a degree of similarity between the recognition result of the basic movement: walking associated with the rule 302 in FIG. 9 and the recognition result of the basic movement: walking detected from the moving image in FIG. 10 is 0.9417. Furthermore, it is assumed that a degree of similarity between the recognition result of the basic movement: turning the right hand forward associated with the rule 302 in FIG. 9 and the recognition result of the basic movement: turning the right hand forward detected from the moving image in FIG. 10 is 0.7018. In this case, (0.9417 + 0.7018)/2 = 0.8218, and the control unit 201 may use 0.8218 as the representative degree of similarity. Note that the representative degree of similarity representing the plurality of degrees of similarity according to the embodiment is not limited to the average value, and may be another value. For example, in another embodiment, the representative degree of similarity may be another statistical value representing the plurality of degrees of similarity, such as a median value, a maximum value, and a minimum value.

Furthermore, in another embodiment, a weighted average may also be used to acquire the representative degree of similarity. For example, weighting may be performed according to an appearance frequency of a basic movement in the rule information 300.

For example, it is assumed that 100 rules 302 are registered in the rule information 300. Furthermore, it is assumed that, among these 100 rules 302, the number of rules 302 in which walking is registered as a basic movement used for detection of an action is 50. On the other hand, it is assumed that, among these 100 rules 302, the number of rules 302 in which turning the right hand forward is registered as a basic movement used for the detection of an action is 10. In this case, it may be seen that the appearance frequency of the basic movement: turning the right hand forward is smaller than that of the basic movement: walking, and the basic movement: turning the right hand forward is a rare basic movement in the rule information 300. In addition, the basic movement that appears infrequently and is rare in the rule information 300 may be more important in the detection of an action by the rule 302 or may more strongly characterize the rule 302 than the basic movement that appears frequently. Thus, in one embodiment, as the appearance frequency of a basic movement to be recognized is lower, the control unit 201 may strongly reflect a degree of similarity for a recognition result of the basic movement to the representative degree of similarity in the rule information 300.

For example, in the example described above, there are 100 rules 302 in the rule information 300, and 50 rules 302 among them include walking as a basic movement of interest. Thus, a weighting coefficient of 2 may be obtained with 100/50 = 2. Similarly, there are 100 rules 302 in the rule information 300, and 10 rules 302 among them include turning the right hand forward as a basic movement of interest. Thus, a weighting coefficient of 10 may be obtained with 100/10 = 10. Then, the control unit 201 may use the obtained weighting coefficients to calculate a weighted average such that (2^{∗}0.9417 + 10^{∗}0.7808)/(2 + 10) = 0.8076, and acquire the representative degree of similarity.

In addition, in the processing of S806, the control unit 201 may use the obtained representative degree of similarity as the degree of similarity between the selected rule 302 and the input moving image.

In S807, the control unit 201 determines whether or not there is an unprocessed rule 302 in the rule information 300. In a case where there is an unprocessed rule 302 in the rule information 300 (YES in S807), the flow returns to S803, and the control unit 201 selects the unprocessed rule 302 and repeats the processing. On the other hand, in a case where there is no unprocessed rule 302 in the rule information 300 (NO in S807), the flow proceeds to S808.

In S808, the control unit 201 specifies and outputs a candidate rule on the basis of the degrees of similarity. For example, the control unit 201 may rearrange the rules 302 in the rule information 300 such that a rule 302 with a high degree of similarity is arranged higher than a rule 302 with a low degree of similarity, and output information indicating the rules 302 as candidate rules. Furthermore, in another example, the control unit 201 may output information indicating a predetermined number of rules 302 with a high degree of similarity as candidate rules.

Furthermore, when outputting the candidate rule, the control unit 201 may output a moving image specified by a moving image property of the basic movement recognition result 301 corresponding to the candidate rule. With this configuration, a user may watch the moving image corresponding to the candidate rule, and may easily confirm whether the output candidate rule is suitable for diversion.

Furthermore, for example, the rules 302 accumulated in the rule information 300 may be classified into a plurality of groups in advance according to a type of an action to be detected, or the like. In this case, the control unit 201 may output, in S808, a predetermined number of rules 302 with a higher degree of similarity for each group. The grouping of the rules 302 may be executed, for example, on the basis of the degrees of similarity. In one example, the control unit 201 evaluates the degrees of similarity between the rules 302 included in the rule information 300. Then, the control unit 201 may classify the rules 302 in the rule information 300 into a plurality of groups by grouping rules 302 with a predetermined degree of similarity or higher degree of similarity into groups. Alternatively, a user may execute the grouping of the rules 302 in advance such that rules 302 that are similar to each other are in the same group.

Then, by performing the grouping in this way and outputting the rule 302 for each group, it is possible to suppress a plurality of substantially the same rules 302 from being specified as candidate rules. For example, in a case where it is desired to retrieve a rule 302 for detecting an action similar to an action captured in a moving image, it may be desirable to specify a rule 302 with a high degree of similarity among rules 302 for detecting not only similar actions but also various actions. By performing the grouping and specifying a candidate rule from the rule 302 for each group, the rule 302 for various actions may be specified as the candidate rule.

As described above, according to the embodiment, when a moving image in which an action desired to be recognized is captured is prepared, a rule 302 focusing on a basic movement that characterizes the action may be specified as a candidate rule. In addition, in one example, when an error due to imaging conditions or the like such as an angle of a subject included in the moving image to be recognized and image quality of the imaging device is adjusted by parameter fitting, the control unit 201 may start detecting an action of a recognition object from the moving image by using the candidate rule. Alternatively, a user may edit the candidate rule to generate a new rule 302 suitable for the moving image. In this case as well, by diverting the candidate rule, the new rule 302 may be created on the basis of the rule 302 in which the basic movement of interest or the like is specified, so that a creation cost of the rule 302 may be reduced.

### (Modification)

Subsequently, a modification will be described. For example, one rule 302 may be applied to a plurality of moving images. In this case, for example, the basic movement recognition result 301 and the action detection period 303 may be acquired from each of the moving images and registered in the rule information 300.

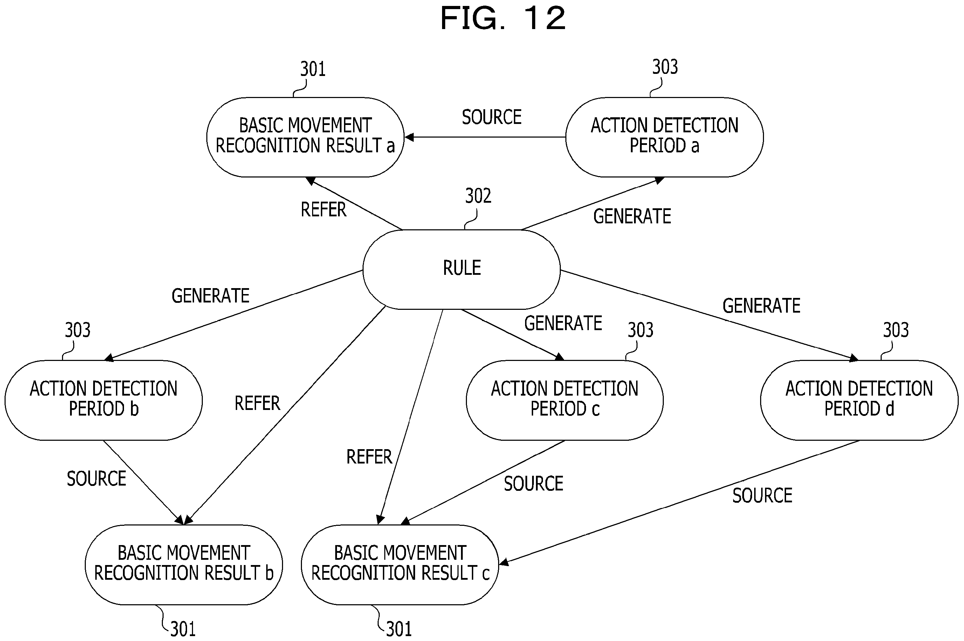

FIG. 12 is a diagram illustrating a graph structure in a case where a rule 302 according to the modification of the embodiment is applied to a plurality of moving images. As illustrated in FIG. 12, the rule 302 is applied to basic movement recognition results 301 (a basic movement recognition result a to a basic movement recognition result c) of the plurality of moving images, and a plurality of action detection periods 303 (an action detection period a to an action detection period d) is generated. Note that, from the basic movement recognition result c, two actions to be detected by the rule 302 are detected, and two action detection periods 303, which are the action detection period c and the action detection period d, are generated.

It is assumed that, in this way, one rule 302 is applied to the basic movement recognition results 301 of the plurality of moving images and the plurality of action detection periods 303 is generated. In this case as well, by evaluating, for each of the basic movement recognition results 301, a degree of similarity with a recognition result of a basic movement in an input moving image, and acquiring a representative degree of similarity representing the plurality of degrees of similarity, the control unit 201 may evaluate a degree of similarity between the input moving image and the rule 302.

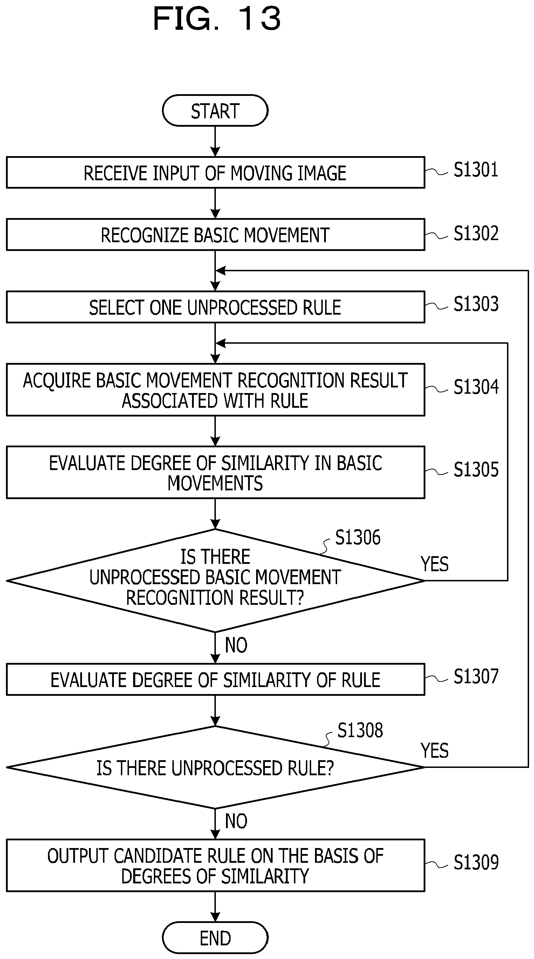

FIG. 13 is a diagram illustrating an operation flow of output processing of a candidate rule according to the modification of the embodiment. For example, the control unit 201 of the information processing apparatus 101 may start the operation flow in FIG. 13 when an instruction for execution of the output processing of a candidate rule is input.

Subsequent processing from S1301 to S1305 may correspond to, for example, the processing from S801 to S805, and the control unit 201 may execute the processing similar to the processing from S801 to S805.

In S1306, the control unit 201 determines whether or not there is an unprocessed basic movement recognition result 301 associated with the selected rule 302. Then, in a case where there is an unprocessed basic movement recognition result 301 (YES in S1306), the flow returns to S1304, and the processing is repeated for the unprocessed basic movement recognition result 301. On the other hand, in a case where there is no unprocessed basic movement recognition result 301 (NO in S1306), the flow proceeds to S1307.

In S1307, the control unit 201 evaluates a degree of similarity of the selected rule 302. For example, when there is one basic movement recognition result 301 associated with the selected rule 302, the control unit 201 may obtain a representative degree of similarity representing degrees of similarity obtained for corresponding basic movements, and use the representative degree of similarity as the degree of similarity of the rule 302. On the other hand, in a case where there is a plurality of basic movement recognition results 301 associated with the selected rule 302, a degree of similarity is obtained for each basic movement recognition result 301, for each basic movement. In this case, the control unit 201 obtains, for each basic movement recognition result 301, a representative degree of similarity representing degrees of similarity of corresponding basic movements. In addition, the control unit 201 may obtain a representative degree of similarity further representing the representative degrees of similarity obtained for the basic movement recognition results 301, and use the representative degree of similarity as the degree of similarity between the moving image and the rule 302. Note that the representative degree of similarity may be, for example, a degree of similarity representing a plurality of degrees of similarity, and may be a statistical value such as an average value, a median value, a minimum value, and a maximum value.

Subsequent processing of S1308 and S1309 may correspond to, for example, the processing of S807 and S808, and the control unit 201 may execute the processing similar to the processing of S807 and S808.

As described above, for example, it is assumed that the rule 302 is applied to the basic movement recognition results 301 of a plurality of moving images. In this case as well, on the basis of a plurality of pieces of time-series information of the rule and second time-series information corresponding to a basic movement detected from a moving image, a degree of similarity between the rule and the moving image may be evaluated and a candidate rule may be output.

Furthermore, as described in the modification, by evaluating degrees of similarity with the plurality of basic movement recognition results 301, it becomes possible to specify a wide range of rules 302 as candidate rules. For example, it is assumed that a moving image in which an action of walking and turning the right hand forward is captured is input as a moving image to be input. In this case, a degree of similarity of the rule 302 including the action of walking and turning the right hand forward is highly evaluated.

Furthermore, for example, it is assumed that the rule information 300 includes a rule 302 for walking and turning one hand forward. In this rule 302, a hand turned forward may be a right hand or a left hand, and as long as an action of walking and turning one hand forward is captured, this rule 302 is satisfied. However, for example, it is assumed that the rule information 300 includes, as a basic movement recognition result 301 associated with this rule 302, only a basic movement recognition result 301 of a moving image in which an action of walking and turning the left hand forward is captured. In this case, since the input moving image is the moving image in which the basic movement of turning the right hand forward is captured, a degree of similarity is lowly evaluated for the basic movement of turning the left hand forward. As a result, a degree of similarity between the input moving image and the rule 302 for walking and turning one hand forward is also lowly evaluated.

On the other hand, for example, as the basic movement recognition results 301 associated with the rule 302, the basic movement recognition result 301 of the moving image in which the basic movement of walking and turning the left hand forward is captured and the basic movement recognition result 301 of the moving image in which the basic movement of walking and turning the right hand forward is captured are associated with each other. Thus, a degree of similarity between the basic movement recognition result 301 of the moving image in which the basic movement of walking and turning the right hand forward is captured and the input moving image is highly evaluated, and accordingly, a representative degree of similarity representing a plurality of basic movement recognition results 301 may also be highly evaluated. As a result, a degree of similarity between the rule 302 for walking and turning one hand forward and the input moving image may be highly evaluated, and the rule 302 for walking and turning one hand forward may be specified as a candidate rule.

In this way, the rule 302 may be described to allow a plurality of basic movements, such as turning one hand forward. By associating a plurality of basic movement recognition results 301 with the rule 302 so as to cover these various descriptions, when the rule 302 to be evaluated matches any one of the basic movement recognition results 301, the rule 302 may be highly evaluated. As a result, it becomes possible to specify a wide range of rules 302 corresponding to the input moving image on the basis of degrees of similarity. Note that, in another embodiment, for basic movements described in parallel in the rule 302, the control unit 201 may use the maximum degree of similarity among degrees of similarity of the plurality of basic movements described in parallel as a representative degree of similarity representing the plurality of basic movements described in parallel.

Although the embodiments have been described above as examples, the embodiment is not limited to these embodiments. For example, the operation flows described above are exemplary, and the embodiment is not limited to this. If possible, the operation flows may be executed by changing the order of processing or may additionally include further processing, or a part of processing may be omitted. For example, in the past execution of the operation flows in FIGs. 8 and 13, in a case where the recognition of the basic movement has already been executed for the input moving image, the processing of S802 and S1302 does not have to be executed.

Furthermore, a recognition result recorded in the basic movement recognition result 301 associated with the rule 302 in the embodiment described above may be, for example, only information regarding a recognition result for a basic movement used in a pattern of basic movements defined in the rule 302. With this configuration, a storage capacity needed for accumulation of the basic movement recognition results 301 may be reduced. However, the embodiment is not limited to this, and the basic movement recognition result 301 may include information regarding a recognition result for another basic movement. Furthermore, the processing of evaluating the degree of similarity between the basic movements in S805 and S1305 may also be executed only for basic movements included in the rule 302. For example, the control unit 201 may evaluate a degree of similarity between a part of time-series information corresponding to a plurality of basic movements of the rule in the second time-series information corresponding to at least one basic movement detected from the moving image and the first time-series information associated with the rule. Furthermore, the detection of the basic movement from the input moving image may be executed only for basic movements registered in the rule 302 of the rule information 300. With this configuration, a processing amount may be reduced.

Furthermore, a basic movement of interest for the rule 302 may not be detected in the input moving image. In this case, the control unit 201 may evaluate a degree of similarity between the rule 302 and the basic movement by using a recognition result in which the basic movement is not detected. Alternatively, the control unit 201 may not evaluate a degree of similarity for a basic movement that is not detected in the input moving image among basic movements included in the rule 302, and may evaluate a degree of similarity between the rule 302 and the input moving image by using a degree of similarity evaluated for another basic movement.

Furthermore, in the embodiment described above, three classes of the basic movement recognition result 301, the rule 302, and the action detection period 303 are defined as the classes of the rule information 300, but the embodiment is not limited to this. For example, in another embodiment, the action detection period 303 may not be included. Alternatively, the information regarding the action detection period 303 may be appropriately generated by the control unit 201 by applying the rule 302 to the basic movement recognition result 301. For example, the control unit 201 may specify a section in which a basic movement to be detected is detected at a predetermined frequency or more as a section in which the basic movement is detected. In addition, the control unit 201 may integrate sections in which a plurality of basic movements included in a pattern of basic movements defined in the rule 302 is detected, and use the integrated sections as an action detection period. Alternatively, in another embodiment, the basic movement recognition result 301 may be recorded in the rule information 300 so that a range of the moving image of the basic movement recognition result 301 is the action detection period 303.

Note that, in the embodiment described above, for example, in the processing of S801 and S802 and S1301 and S1302, the control unit 201 of the information processing apparatus 101 operates as the detection unit 211. Furthermore, in the processing of S806 and S1307, the control unit 201 of the information processing apparatus 101 operates as, for example, the evaluation unit 212. In the processing of S808 and S1309, the control unit 201 of the information processing apparatus 101 operates as, for example, the output unit 213.

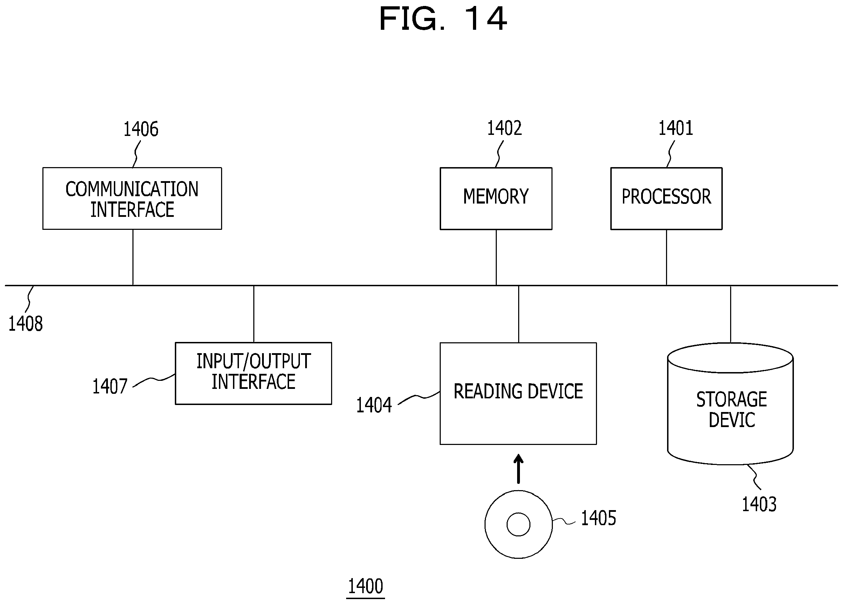

FIG. 14 is a diagram illustrating a hardware configuration of a computer 1400 for achieving the information processing apparatus 101 according to the embodiment. The hardware configuration in FIG. 14 includes, for example, a processor 1401, a memory 1402, a storage device 1403, a reading device 1404, a communication interface 1406, and an input/output interface 1407. Note that the processor 1401, the memory 1402, the storage device 1403, the reading device 1404, the communication interface 1406, and the input/output interface 1407 are connected to each other via a bus 1408, for example.

The processor 1401 may be, for example, a single processor, a multiprocessor, or a multicore processor. The processor 1401 uses the memory 1402 to execute, for example, a program describing procedures of the operation flows described above, so that some or all of the functions of the control unit 201 described above are provided. For example, the processor 1401 of the information processing apparatus 101 operates as the detection unit 211, the evaluation unit 212, and the output unit 213 by reading and executing a program stored in the storage device 1403.

The memory 1402 is, for example, a semiconductor memory, and may include a RAM region and a ROM region. The storage device 1403 is, for example, a semiconductor memory such as a hard disk or a flash memory, or an external storage device. Note that RAM is an abbreviation for random access memory. Furthermore, ROM is an abbreviation for read only memory.

The reading device 1404 accesses a removable storage medium 1405 according to an instruction from the processor 1401. The removable storage medium 1405 is achieved by, for example, a semiconductor device, a medium to and from which information is input and output by magnetic action, or a medium to and from which information is input and output by optical action. Note that the semiconductor device is, for example, a universal serial bus (USB) memory. Furthermore, the medium to and from which information is input and output by magnetic action is, for example, a magnetic disk. The medium to and from which information is input and output by optical action is, for example, a CD-ROM, a DVD, or a Blu-ray Disc (Blu-ray is a registered trademark). CD is an abbreviation for compact disc. DVD is an abbreviation for digital versatile disk.

The storage unit 202 described above includes, for example, the memory 1402, the storage device 1403, and the removable storage medium 1405. For example, the storage device 1403 of the information processing apparatus 101 stores the basic movement recognition result 301, the rule 302, and the action detection period 303 of the rule information 300.

The communication interface 1406 communicates with another device, for example, according to an instruction from the processor 1401. For example, the information processing apparatus 101 may receive moving image data from the imaging device 102 via the communication interface 1406. The communication interface 1406 is one example of the communication unit 203 described above.

The input/output interface 1407 is, for example, an interface between an input device and an output device. The input device is, for example, a device such as a keyboard, a mouse, or a touch panel that receives an instruction from a user. The output device is, for example, a display device such as a display or an audio device such as a speaker.

Each program according to the embodiment is provided to the information processing apparatus 101 in the following forms, for example.
(1) Installed in the storage device 1403 in advance.
(2) Provided by the removable storage medium 1405.
(3) Provided from a server such as a program server.

Note that the hardware configuration of the computer 1400 for achieving the information processing apparatus 101 described with reference to FIG. 14 is exemplary, and the embodiment is not limited to this. For example, a part of the configuration described above may be deleted or a new configuration may be added. Furthermore, in another embodiment, for example, a part or all of the functions of the control unit 201 described above may be implemented as hardware including FPGA, SoC, ASIC, and PLD. Note that FPGA is an abbreviation for field programmable gate array. SoC is an abbreviation for system-on-a-chip. ASIC is an abbreviation for application specific integrated circuit. PLD is an abbreviation for programmable logic device.

Several embodiments have been described above. However, the embodiment is not limited to the embodiments described above, and it should be understood that the embodiment includes various modifications and alternatives of the embodiments described above. For example, it would be understood that various embodiments may be embodied by modifying components without departing from the spirit and scope of the embodiments. Furthermore, it would be understood that various embodiments may be implemented by appropriately combining a plurality of components disclosed in the embodiments described above. Moreover, a person skilled in the art would understand that various embodiments may be implemented by deleting some components from all the components indicated in the embodiments or by adding some components to the components indicated in the embodiments.

## Claims

1. An information processing apparatus comprising:
a detection unit configured to detect a plurality of movements of an object from a moving image;
an evaluation unit configured to:
generate a first timing that indicates a first movement included in the plurality of movements is detected in the moving image for each of a plurality of time units of the moving image,
acquire second timings that indicate the first movement within each of at least one of patterns of the plurality of patterns including the first movement, the second timings indicating when movements occur for each of a plurality of time units of time period, and
obtain a plurality of first similarity values by calculating a first similarity value between the moving image and each of the patterns based on the first timing and each of the second timings; and
an output unit configured to specify a candidate pattern from the patterns based on the plurality of first similarity values.

2. The information processing apparatus according to claim 1, wherein the output unit is further configured to
recognize a combined movement that includes the first movement and a second movement from the moving image,
wherein the combined movement is associated with the patterns.

3. The information processing apparatus according to claim 1 or 2, wherein each of the plurality of time units is a frame, and
the evaluation unit is further configured to:
acquire a first ratio of a number of frames in which the first movement is detected within the first timing to a total number of frames included in the first timing,
acquire a plurality of second ratios, each of the plurality of the second ratios being a ratio of a number of frames in which the first movement occurs within each of the second timings to a total number of frames included in each of the second timings, and
acquire differences between the first ratio and each of the plurality of the second ratios.

4. The information processing apparatus according to any one of claims 1 to 3,
wherein the evaluation unit is further configured to generate the first timing by Dynamic Time Warping method.

5. The information processing apparatus according to any one of claims 1 to 4,
wherein the object is a human.

6. The information processing apparatus according to any one of claims 1 to 5,
wherein the plurality of patterns are classified into a first rule group and a second rule group, and
the output unit is further configured to:
specify a first candidate rule from the first rule group based on the plurality of first similarity value, and
specify a second candidate rule from the second rule group based on the plurality of first similarity value.

7. The information processing apparatus according to claim 2, wherein the evaluation unit is further configured to:
generate a third timing that indicates the second movement included in the plurality of movements is detected in the moving image for each of the plurality of time units,
acquire fourth timings that indicate the second movement within each of at least one of patterns of the plurality of patterns including the second movement, the fourth timings indicating when movements occur for each of the plurality of time units of the time period,
obtain a plurality of second similarity values by calculating a second similarity value between the moving image and each of the patterns based on the third timing and each of the fourth timings, and
calculate a plurality of total similarity values by weighting the plurality of first similarity values and the plurality of second similarity values based on an occurrence of the first movement and an occurrence of the second movement in each of the patterns, wherein
the output unit is further configured to specify the candidate pattern based on the plurality of total similarity values.

8. The information processing apparatus according to any one of claims 1 to 7, wherein the output unit is further configured to
develop, from the candidate pattern, a new recognition rule for artificial intelligence of a combined movement of the object within a plurality of moving images, the combined movement includes at least a plurality of movements.

9. An output method for a computer to execute a process comprising:
detecting a plurality of movements of an object from a moving image;
generating a first timing that indicates a first movement included in the plurality of movements is detected in the moving image for each of a plurality of time units of the moving image;
acquiring second timings that indicate the first movement within each of at least one of patterns including the first movement, the second timings indicating when movements occur for each of a plurality of time units of time period, the patterns are included in a plurality of patterns for recognition of movement within at least one moving image;
obtaining a plurality of first similarity values by calculating a first similarity value between the moving image and each of the patterns based on the first timing and each of the second timings; and
specifying a candidate pattern from the patterns based on the plurality of first similarity values.

10. An output program that causes at least one computer to execute a process, the process comprising:
detecting a plurality of movements of an object from a moving image;
generating a first timing that indicates a first movement included in the plurality of movements is detected in the moving image for each of a plurality of time units of the moving image;
acquiring second timings that indicate the first movement within each of at least one of patterns including the first movement, the second timings indicating when movements occur for each of a plurality of time units of time period, the patterns are included in a plurality of patterns for recognition of movement within at least one moving image;
obtaining a plurality of first similarity values by calculating a first similarity value between the moving image and each of the patterns based on the first timing and each of the second timings; and
specifying a candidate pattern from the patterns based on the plurality of first similarity values.
